# EUROPEAN PATENT APPLICATION

(11) **EP 2 287 754 A2**
(43) Date of publication of application: **23.02.2011**
(21) Application number: 10183795.3
(22) Date of filing: 02.09.2000
(51) Int. Cl.: G06F 17/30

(54) **Marking of moving objects in video streams**

(30) Priority: 03.09.1999 US 390044; 03.09.1999 US 389916; 03.09.1999 US 390047
(62) Divisional of application: 00959860.8
(71) Applicant: JLB Ventures LLC, Washington, DC 20005 (US)
(72) Inventor: Kamen, Yakov, Cupertino, CA 95014 (US); Shirman, Leon, Redwood City, CA 94062 (US)
(74) Representative: Freeman, Jacqueline Carol

(57) **Abstract**

A method for annotating a video image to include interactive links comprises the step of manually establishing active areas (114) in a subset of the frames of the video image, and using interpolation to establish the active areas for the remaining frames. The active area is an area of a screen (514) where a viewer can place a cursor and click, to thereby activate a link. This link could be a link to a URL or some other kind of link. The interpolation can be a linear interpolation or a spline interpolation technique. The video image can be communicated to a viewing system along with annotation corresponding to some of the video frames but not others of the video frames. The receiving system can determine the active areas for the others of said frames by interpolation.

## Description

### Background of the Invention

This application pertains to marking of objects in a video stream.

It is known in the art to annotate or "mark" objects in a video stream with an interactive link. For example, suppose one were watching a video program of an automobile race, and there were a number of racing cars shown driving around a track. Also suppose that these cars were marked with interactive links. What this means is that one can position a cursor over the image of one of the cars and click on the image. This will cause the system controlling the video screen to display information that is linked to that image. This link can be in the form of a URL, and the system would display a web page depicting information concerning the car or driver that has been clicked on.

When one "marks" an object, one establishes an area of the video screen surrounding that object (or near that object) as an "active area". If a viewer subsequently clicks on the active area, a link will be invoked. Referring back to the above example, if one of the racing cars is marked, there will be an active area surrounding or near the image of that racing car. If a viewer moves a cursor into that "active area" and clicks on that active area, the above-mentioned link will be invoked.

In a video of a racing car, the car constantly moves, and its position on the video screen constantly changes. Accordingly, the active area corresponding to the car must constantly change, and "keep up" with the car. Thus, each frame of the video must be marked with an appropriate active area for that car. Often, this is accomplished by image recognition. In other words, during an editing process, video editing apparatus recognizes if the car has moved from the right side of the video screen to the left side of the video screen. If this has happened, the editing apparatus will establish a new active area for that car on the left side of the screen for those video frames where the car is on the left side of the screen. Unfortunately, there are several problems with image recognition. For example, image recognition systems typically use the color of an object to track its location. If the object moves into an area where the lighting changes, e.g. because a shadow is cast on the object, that can prevent accurate image recognition. In addition, image recognition has other problems that can introduce errors into the process of marking an object.

Image recognition is well known in the art and is discussed by J.P. Lewis in "Fast Normalized Cross-Correlation", http://wvvw.idiom.com/∼zilla/Papers/nvisionlnterface/nip.ht; U.S. Patent 5,267,332, issued to Walch et al.; U.S. Patent 4,611,347, issued to Netravali et al.; U.S. Patent 4,868,871, issued to Watson, III; R.O. Duda et al., "Pattern Classification and Scene Analysis", published by John Wiley and Sons in 1973; and R.C. Gonzalez et al., "Digital Image Processing", 3d edition, published by Addison-Wesley in 1992. Lewis, Walch, Netravali, Watson, Duda and Gonzalez are incorporated herein by reference.

Instead of using image recognition apparatus, a person could mark each frame of the video manually. However, marking each frame of the video would be very tedious and time-consuming. What is needed is a novel method for marking moving objects that reduces the amount of human interaction required.

### Summary

A method in accordance with the invention comprises the step of annotating a video clip with a link. (The video clip can be animation, and as used herein, "video" includes animation.) This link can be a link to a web page or other source of information, or a link to application software. In one embodiment, a first set of frames within a video clip is annotated, e.g. using video editing apparatus. During this step of annotation, a portion of each annotated frame is designated as an active area." This means that if one moves a cursor to the active area and clicks within the active area, a link associated with the active area will be executed.

The active area is typically associated with an image of an object, e.g. a car racing around a track, an actor in a scene, a product displayed in a commercial, a cartoon character, or some other person or thing. Accordingly, during annotation of a frame, a person annotating the video clip will establish the location of the active area associated with that object. (The active area is typically a rectangular or circular region surrounding the object in question.)

It would be extremely unwieldy to annotate every frame in a video clip in this manner. Accordingly, in accordance with the invention, only a subset of the frames (e.g. every tenth frame) is annotated. The location of the active area in the other frames is established by interpolation. The location can be established by a linear interpolation technique. Alternatively, the location can be established by an interpolation technique that generates a curve, such as a spline interpolation technique.

In another embodiment of a method in accordance with the invention, a subset of frames, for example two frames such as the first and last frames of a sequence of frames, are manually annotated. A video editing system then calculates the position of the active area for each frame between these manually annotated frames of the sequence based on an interpolation algorithm. The system then determines the difference between the interpolated position of the active area and the position of the object with which the active area is associated for each of the frames. This calculation is based on image recognition. The image recognition can be carried out by image recognition software. Alternatively, image recognition can be performed by a combination of hardware and software. (Image recognition can also be performed by hardware. The partitioning between hardware and software can be done in different ways.) Thereafter, the system highlights those frames that the system has determined to exhibit the greatest error. In other words, the system highlights those frames in which the distance between the active area and the object associated with that active area is greatest. One skilled in the art can define a distance between an active area and the object based on maximum, minimum or average distance between selected area and points within the object.

In one embodiment, the system flags the frame with the largest error. In another embodiment, the system flags the n frames with the n largest errors, where n is an integer. In another embodiment, the system flags all frames in which the error is over a certain threshold.

Thereafter, the person annotating the video clip can observe the flagged frames and decide whether he or she desires to manually annotate those frames. The person annotating the video clip also has the option of recalculating the interpolation. After recalculating the interpolation, the user can see if other frames are flagged that might require manual annotation.

Flagging may be accomplished by highlighting the flagged frame on a display or by providing some other form of output indicator.

In accordance with another aspect of the invention, a video signal is sent to one or more video viewing systems so that one or more viewers can watch the video signal. The video signal can be broadcast to many viewers. The location of one or more active areas associated with a video signal is also communicated to the one or more video viewing systems for some of the frames of the video signal, but not other frames of the video signal. The one or more video viewing systems determine the location of the one or more active areas for the other frames by interpolation. In this way, instead of having to provide data to the video viewing systems concerning the active area locations for each frame, such data is provided only for selected frames, and the video viewing systems calculate where the active areas for the other frames should be by interpolating, e.g. using either a linear interpolation technique or a spline interpolation technique. Because the source of the video signal need not provide active area information for each frame of the signal, the bandwidth requirements for communicating this information are reduced.

In one embodiment, not only is the location of the active area communicated in this way, but the size of the active area is communicated in this way as well.

In accordance with another aspect of the invention, a video signal comprising a set of frames is communicated along with the location of an active area for some of the frames but not others of the frames. The active area corresponds to an object depicted in those frames. The object can be a product, a person, a cartoon character, or anything else that can be depicted in a video. As mentioned above, the active area is not communicated for the others of the frames, although the object is depicted in the others of the frames. A receiving system calculates the location of the active area by interpolation based on the location of the active area for said some of the frames. In this way, the bandwidth requirements for communicating the location of the active areas is reduced.

### Brief Description of the Drawings

Fig. 1 illustrates a display screen of a video editor/player used to annotate a video clip in accordance with the present invention.
Fig. 2 illustrates the position of an object on a video screen along the y direction vs. frame number for a sequence of frames in a video clip.
Fig. 3 is a flow diagram illustrating a method in accordance with a first embodiment of our invention.
Fig. 4 illustrates the data architecture for a video editor/player used to mark a video clip in accordance with the invention.
Fig. 5 is a block diagram of a signal transmission system and a reception and display system in accordance with another embodiment of the invention.
Fig. 6 illustrates the position of the active area along the y axis vs. the frame number of a video clip.

### Detailed Description

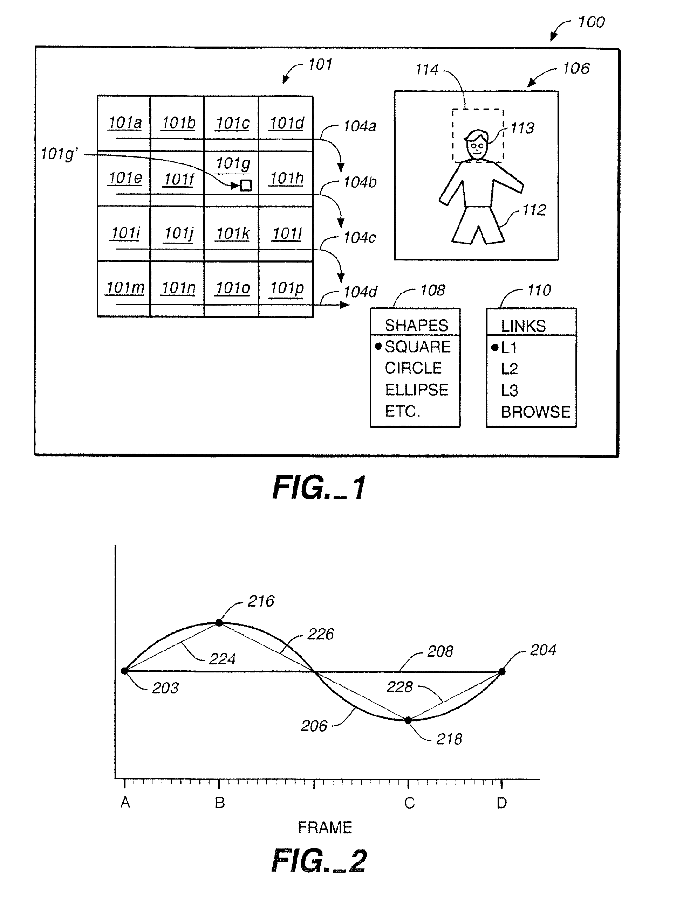

Fig. 1 shows a display screen 100 depicting a typical graphical user interface ("GUI") for marking editors. Such an interface can be used during a method in accordance with our invention. Screen 100 shows a sequence of so-called key frames 101a to 101p in the editing area. As is known in the art, video images comprise a sequence of frames. For digital video, each frame corresponds to an array of pixels. Each pixel is a data value corresponding to the color, brightness and saturation of a small area of the frame. In certain video compression or encryption schemes, instead of storing every pixel array of every frame, the entire pixel array is stored only for certain "key" frames. Data is stored for the other frames that merely represent the difference between the image in those other frames and the preceding key frame. An example of a compression technique that uses this scheme is MPEG-2 (motion pictures expert group standard 2).

For the case of linearly digitized analog video that is not compressed or encrypted, every nth frame (e.g. every 10^{th} frame) can be chosen as a key frame (along with frames corresponding to scene changes). As mentioned above, screen 100 depicts a sequence of key frames 101a to 101p.

Arrows 104a to 104d are not depicted on screen 100. Rather, arrows 104a to 104d are included in Fig. 1 merely to symbolize the chronological sequence of the frames.

Screen 100 includes a region 106 that depicts one of key frames 101a to 101p. The image in region 106 is magnified compared to the depiction of key frames 101a to 101p elsewhere on the screen, and represents the frame that is currently being edited. In the example of Fig. 1. key frame 101g is being edited. This is indicated by the presence of an icon or mark 101g' provided at frame 101g.

Typically, screen 100 also depicts navigation bars and toolbars for functions such as fast forward, fast backwards, new file, etc. The system driving display 100 includes software drivers for supporting the navigation bars and toolbars. These navigation bars and toolbars are not shown in Fig. 1 for sake of clarity.

Also shown on screen 100 is a menu box 108 which enables a user to select a shape of an active area about an object that a viewer will be able to click on. Box 108 enables an editor to select among many different shapes for the active area, only some of which are depicted in Fig. 1. As mentioned above, the active area is the location on a screen where an object of interest (e.g. a car or a person) is displayed. By clicking within the active area associated with that object or person, one effectively clicks on that object or person.

(When a viewer ultimately watches the video clip, the active area may or may not be displayed. For example, the system on which the video is displayed may highlight the active area. Alternatively, other systems on which the video is displayed may not highlight the active area. In yet other systems, the viewer may have the option to decide whether or not to highlight the active area.)

Referring back to Fig. 1, box 110 is a menu box that allows the editor to introduce the link into the image, which is typically a URL. However, other types of links can be provided, including specialized links for launching desired application software.

As seen in Fig. 1, region 106 depicts a person 112, whose head 113 has been marked by a square 114 and linked to a link L 1. (The square shape has been selected in menu box 108, and link L1 has been selected in menu box 110.) Square 114 symbolizes the active area. During a scene in a video, objects (e.g. the head of a person) typically move in a limited, non-jerked manner. (Good camera control during filming of a movie, television show or other video typically involves minimizing any jerking of the object of interest on the screen. Also, a small object moving in a jerked fashion, even if closely followed, would be difficult for a viewer to target when viewing the annotated video.)

Square 114 represents the active area of the video screen on which a viewer will click if he wants to access information linked to person 112. For example, if the video is a soap opera, and the viewer wants to obtain more information about the character played by person 112. he will click on person 112, and in particular, he will position the cursor within the active area represented by square 114

During the video, person 112 typically moves about the set. Accordingly, it is necessary to have active area 114 move about the screen. This is necessary because if person 112 walks from the left side of the video screen to the right side of the video screen, and the viewer wants to find out more about person 112, he is going to want to click on current location of person 112.

In principal, one could annotate each frame of the video to determine where active area 114 should be positioned, but this would be an enormously tedious, time-consuming task. Accordingly, it would be desirable to simplify this task. In accordance with the present invention, some of the frames are annotated by placing active area 114 at an appropriate location. (This can be done manually or through other techniques.) The other frames are annotated by an interpolation method described below.

Fig. 2 illustrates the position of head 113 in a video along the y direction for each frame in a series of frames from a start frame A to an end frame D. Point 203 represents the starting position of head 113 at the start of a scene and point 204 represents the ending position of head 113 at the end of the scene. Line 206 traces the position of head 113 between points 203 and 204 as the scene progresses. (Head 113 changes position, e.g. as person 112 moves about the set during the video.)

Line 208 shows a direct linear interpolation, resulting by having a straight line between the two positions 203 and 204. In other words, rather than annotating each frame manually, the position of active area 114 is automatically inserted into each frame by performing linear interpolation between positions 203 and 204. As can be seen, this is not necessarily the most accurate way of annotating the frames. One can improve the linear interpolation by manually annotating more frames, and linearly interpolating between each frame for which a manual annotation has been performed.

Fig. 2 also shows intermediate points 216, 218, indicating the position of head 113 in frames B and C, respectively. In one embodiment, the position of active area 114 is manually inserted (e.g. visually) for a set of frames, e.g. frames A, B, C and D. The position of active area 114 is established by linear interpolation between each point for which the position of active area 114 has been manually annotated. Thus, in Fig. 2, lines 224, 226 and 228 are the result of linearly interpolating between points 203 and 216, points 216 and 218, and points 218 and 204 respectively.

A more accurate way of interpolating is to use an interpolation technique that results in the generation of a curve that represents the position of the object from frame to frame. An example of such a technique is spline interpolation. When performing spline interpolation, one typically only needs the end points and one or two intermediate points, and the spline interpolation technique will accurately track the object. The spline will smooth the motion and eliminate jitter often seen by image recognition.

It will be appreciated that one must not only establish the position of an object in the y direction, but also the x direction. Thus, during a method in accordance with our invention, the position of the active area will be established by interpolation for both the y and x directions. In addition, the object associated with the active area can expand or contract during the course of a video scene, e.g. because it moves closer to or further from the camera. Accordingly, in one embodiment. the size of active area 114 is also manually annotated for several frames during a scene. and the size of the active area is thereafter interpolated in the same manner as the position of the object.

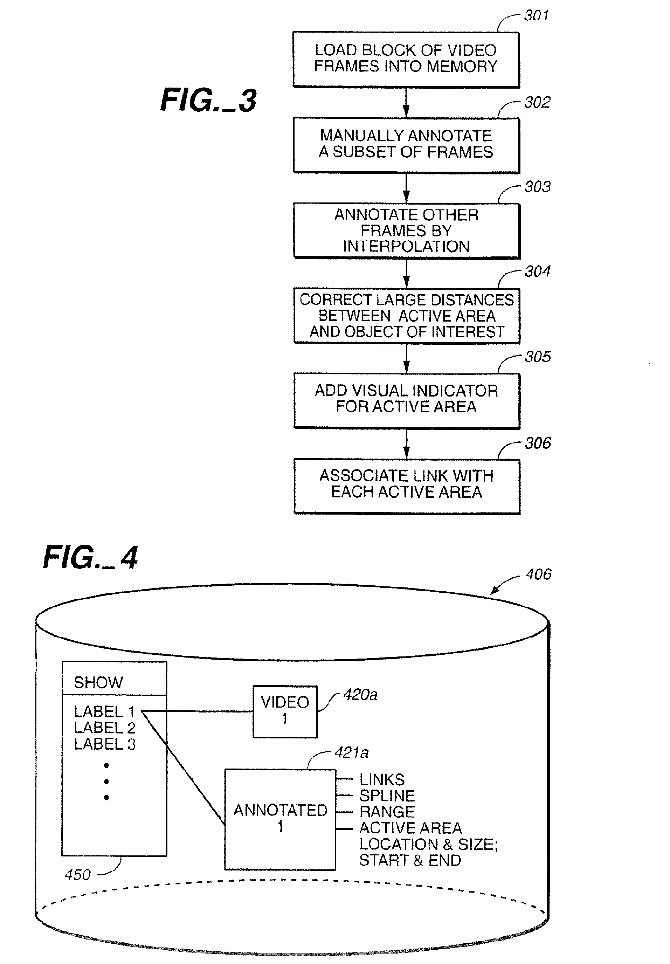

Fig. 3 is a block diagram illustrating a method in accordance with a first embodiment of the invention. Referring to Fig. 3, the method begins by loading a block of video frames into a memory (step 301). The memory can be a magnetic memory (e.g. a magnetic disk, magnetic tape or magneto-optic disk). The memory can also be an optical disk or a semiconductor memory such as a DRAM, SRAM, EPROM, or other type of memory. The video information can be either in analog form or in digital form.

Thereafter, one manually annotates a subset of those frames (step 302). During this step of manual annotation, a set of frames are typically displayed on portions 101a a to 101 p of the screen 100, and one of those frames can be selected for annotation at a time. The selected frame is shown on portion 106 of screen 100. The location, size and shape of the active area are established within those frames that are being annotated, and a link associated with that active area is established. Manual annotation can be performed using an input device such as a mouse, touchpad, joystick, trackball, cursor control keys, or other input device of the video editing system. During this step, the annotation information is stored in a memory, e.g. as described below.

For the frames that are not manually annotated, annotation is done by interpolation (step 303). This can be done by any of the following steps:
a) linear interpolation of the position of the active area and linear interpolation of the size of the active area;
b) linear interpolation of the position of the active area with no change in size of the active area;
c) spline interpolation of the position of the active area and spline interpolation of the size of the active area; or
d) spline interpolation of the position of the active area with no change in the size of the active area.

In lieu of linear or spline interpolation, other interpolation techniques can be used. By way of example, interpolation can be:
a) between the start and end frames in a video clip; or
b) interpolation from each manually annotated frame to the next manually annotated frame. (Typically, the start and end frames of the clip are among the frames that are manually annotated.)

Referring to block 304, it is possible that interpolation can produce an error in position of the active region. In other words, there will be a difference between the position of an object and the position of the active area associated with that object. After interpolation, a person annotating the video clip can view the location of the active areas for the various frames at portions 101a to 101p of screen 100. If one of the frames shows a large discrepancy between the position of object 113 and active area 114, the person editing the video clip can manually annotate that frame, and have the editing system re-compute (e.g. by interpolation) all of the active area positions for the frames that have were not manually annotated.

After establishing the position of active area 114, the person annotating the video clip chooses the form of the links represented for users. Instead of using a box, circle, ellipse or other shape, the active area could by depicted as a logo (e.g. a GIF file), a piece of animation (e.g. an animated GIF file) or other video stream segment. (GIF is an acronym for graphics interchange format.) As mentioned above, optionally, the active area can be visually indicated when the annotated video clip is later viewed.

Referring to block 306, either after or before interpolation, a link to a URL can be associated with each active area. Thus, when a viewer clicks on that active area, that URL will be invoked. As mentioned above, the link need not be to a URL. It can also be a link to application software, or a source of information stored at a particular address.

Fig. 4 illustrates a data architecture for an embodiment of a video editor/player used to mark a video clip. Such a video editor/player comprises a data mass storage device 406 that contains numerous video clips. The data mass storage device can be a magnetic disk, a magneto-optic disk, an optical disk, a semiconductor memory, or other type of memory storage device.

Only one video clip 420a is shown in Fig. 4 for clarity, along with one matching annotation file 421a, although more than one video clip and annotation file may be stored in memory device 406. There can be more than one annotation file per video clip. The annotation file contains such things as the spline (either as a formula or as a reference to a predefined set of spline types) and its associated parameters, the link itself, and the color and size of the marker of the active area. Element 450 is a table or database, containing all the associated labels for each video sequence of frames, thus serving as a directory for the video presentation. There may be, of course, several databases of shows and annotation files, possibly organized in a hierarchy structure, and they may share some of the files 420 or 421 depending on the edits done.

In one embodiment, during annotation, data is loaded into a memory corresponding to the frame number, the location of the active area, its shape, its size, and the URL or other link associated with that active area. That data is provided to the viewer along with the video signal, typically in a separate file. This information can be provided as a separate data stream to the viewer. The viewer's video display system tracks the frame number, and for each frame, determines whether a cursor is positioned within one of the active areas established for that frame.

In another embodiment, information concerning the location of the active area, its shape, its size, and the link are communicated and embedded as part of the video signal. This information can be provided during one of the blanking intervals of the signal or during some other portion of the signal that is not typically used.

### Embodiment In Which Interpolation Errors Are Minimized or Corrected

As can be seen in Fig. 2, when using interpolation to establish an active area on a video screen, there can be errors between the position of the marked object and the position of the active area. In accordance with another embodiment of the invention, these errors can be reduced or minimized through the following technique.
1. A block of video frames is loaded into a memory (step 301 of Fig. 3).
2. A first set of n frames is manually annotated, where n is greater than or equal to 2 (step 302 of Fig. 3). The n frames can be the first and last frames in a video sequence.
3. Interpolation is performed to establish an estimated position of an active area for those frames within the video sequence that are not manually annotated (step 303 of Fig. 3). Interpolation can be by linear interpolation. Alternatively, interpolation can be by a technique that results in a curve, e.g. a spline technique. As mentioned above, several interpolation techniques can be used to generate lines or curves, and the person annotating the video clip can choose among them.
4. For each frame that is not manually annotated, the video system calculates the distance between the active area and the object that the active area is associated with. (The position of the active area is established by interpolation. The position of the object is established by automated image recognition techniques, e.g. as discussed above. As indicated above, image recognition may or may not be accurate.)
5. The system flags those frames that have the greatest distance between active area 114 and the object 113 that the active area is associated with. The system can highlight those frames (e.g. one or more frames 101 a to 101p) that exhibit these distances and can place an icon or other marker at those frames, or it can use some other technique for identifying these frames to the user. The user can look at these frames, and verify whether the active area is, in fact, an unacceptable distance from the object with which it is associated.
6. If the user believes that this distance is unacceptable, he or she can manually annotate the frames exhibiting the unacceptable error (step 304 of Fig. 3).
7. After manually annotating the frames exhibiting the unacceptable error, the user can cause the system to recompute (e.g. by again interpolating) the position of the active area based on data including the new manual annotation.
8. Optionally, the user can have the system take the new interpolated active area positions and establish another list of frames having the largest errors. If the user finds these errors to be acceptable, or merely artifacts relating to image recognition errors, he or she can ignore them.
9. One then associates an active area shape (and optionally a visual indicator) and a link with the active area.

As mentioned above, during step 304 of Fig. 3, one can cause the system to compute the distance between the active area and the object associated with that active area, and flag those frames shown at portions 101 a to 101p of screen 100 having unacceptable errors. The user can manually annotate those frames exhibiting unacceptable errors as described above. (This process can be used to adjust both the position (along both the x and y axes) and size of the active areas.)

### Communicating Information Regarding the Active Areas to a Television Viewer

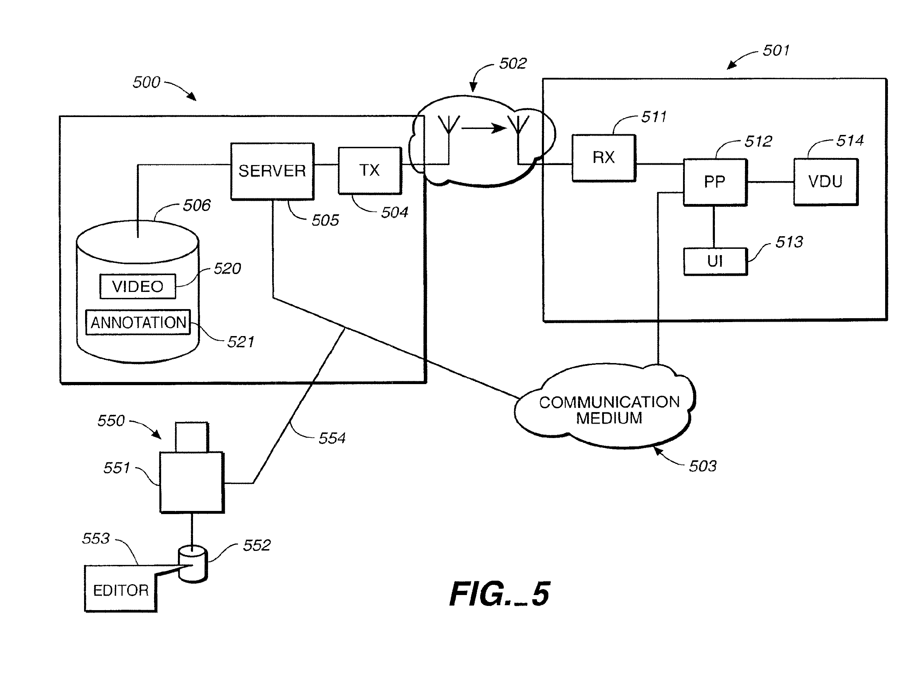

After the video frames are marked with information concerning the active areas, it is necessary to communicate that information to the viewer's video system. Fig. 5 illustrates a video transmission system 500 comprising a data mass storage device 506 including a portion 520 that stores a video program to be transmitted. The video program can be any type of program-sporting events, soap operas, educational programs, cartoons and other animation, etc. Also included within mass storage device 506 is a portion 52I that contains annotation information. This annotation information includes a) the location of several active areas associated with various frames of the video program; b) the size of those active areas; and c) the link that those active areas are associated with. (The link can be in the form of a URL.) In other words, the annotation information might indicate that in a particular frame of the video program, there is a first active area located in the upper left portion of the video frame, and that active area has a certain size. If the viewer clicks on that active area. that should activate a link to a particular web page.

Mass storage device 506 can be any type of mass storage device, e.g. a magnetic disk, magnetic tape, optical or magneto-optic media, or other data storage structure.

Information from mass storage device 506 is provided to a data separation circuit 505 that separates out the video signal and provides that video signal to a conventional transmitter 504. (Data separation circuit 505 is typically a server.) A television system 501 includes a receiver 511 for receiving the video signal. While Fig. 5 includes symbols indicating that the video signal is transmitted and received as conventional television radio signals, the video signals can be communicated by other means, e.g. an electrical cable, optical cable, microwave satellite communication, telephone lines, the internet, or other signal communication technique.

The annotation information (e.g. the location and size of the active area, along with the URL information associated with the active area) is communicated to televisions system 501 via a communication medium 503, which can be the same as, or different from, the medium by which the video signal is communicated. Thus, communication medium 503 can be conventional radio signals, an electrical cable, optical cable, microwave, satellite communication, telephone line, the internet, or other signal communication technique.

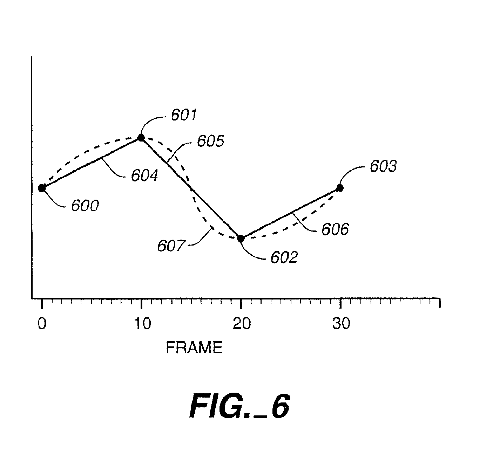

The annotation information is received by a preprocessing unit 512. Preprocessing unit 512 calculates, via an interpolation technique, the location of each active area of each frame for those frames in which that data was not provided by transmission system 500. In one embodiment, the interpolation technique is a linear interpolation technique, e.g. as described above with respect to which Fig. 2. For example, suppose transmission system 500 provides the location for an active area every tenth frame. Fig. 6 illustrates that the y coordinate values for the active area for frames 0, 10, 20 and 30, indicated by points 600, 601, 602 and 603, respectively. If a linear interpolation technique is used, it will be assumed that the y coordinate for the active area will be as established by lines 604, 605 and 606. Other interpolation techniques can be used, e.g. techniques that generate a curve instead of a straight line between specific points. For example, a spline interpolation technique can be used. If a spline interpolation technique is used, depending upon the spline calculation parameters, it will be assumed that the y coordinate for the active area will be along curve 607.

Fig. 6 illustrates the y coordinate of the active area vs. frame number. Similar calculations are performed for the x coordinate of the active area, and the size of the active area. (The size of the active area can increase or decrease. e.g. depending on whether the object associated with the active area moves toward or away from the camera.)

Referring again to Fig. 5, it is seen that the preprocessing unit 512 provides the video signal to a video display unit 514. Preprocessing unit 512 is coupled to a user interface. The user interface 513 permits a user to control certain features of the image displayed on display unit 514, e.g. whether a marker will be shown on the screen indicating the location of the active area. User interface 513 also permits a user to click on the various active areas to activate the links associated therewith.

User interface 513 typically has an appropriate control mechanism such as a trackball, mouse, touchpad or joystick. This interface is used to position a visible cursor on video display unit 514 so that the viewer knows what object he is clicking on. Preprocessing unit 512 determines whether the cursor has been positioned over an active area. In one embodiment, preprocessing unit 512 comprises a microprocessor system.

As mentioned above, in one embodiment of the invention, the active areas for selected frames are established, e.g. using a manual annotation system. The active areas are associated with objects depicted in the video frames. During this method, the location, size and shape of each active area is established for some (but not all) of the frames of the video clip. For other frames of the video clip, the location and size of the active areas is established by interpolating between the frames. In one embodiment, the location and size of the active areas for those frames that were manually annotated are communicated to video system 501. In other embodiments, the frames for which active locations and sizes are communicated are selected on other bases. For example, the location and size of the active areas can be communicated to receiving video system 501 for every tenth frame. Alternatively, the location and size of the active areas can be communicated only for the so-called "key frames" of the video clip. (As mentioned above, certain video compression algorithms communicate the entire pixel array only for certain key frames. For other frames, only information corresponding to the change between one frame and the next is communicated. The key frames are those frames for which the entire pixel array is communicated.)

Referring again to Fig. 5, in one embodiment, a workstation 550 can be coupled to video transmission system 500. Workstation 550 comprises a personal computer ("PC") 551 and a local memory storage device 552 (e.g. a disk) or other non-local storage (e.g. a server) that contains editing software 553. Workstation 550 is used to annotate the video clip. In this example, workstation 550 is coupled via a communication line 554 to server 505, but many other ways to network workstation 550 to server 505 can be used. In some embodiments, editor software 553 can run on server 505. In other embodiments, the files (both the video and annotation files) may reside on the local memory 552.

While the invention has been described with respect to specific embodiments, those skilled in the art will appreciate that changes can be made in form and detail without departing from the spirit and scope of the invention. For example, the pixels of the video frames can be stored in terms of RGB values. (RGB refers to the values of the red, blue and green color components associated with the pixel.) Alternatively, the pixel values can be stored in terms of color, saturation and intensity. Screen 100 and/or video display unit 514 can be a CRT screen, and LCD, a projection display, or other appropriate display technology. Different types of video editing/annotating systems can be used to practice the method of the present invention. The interpolation can be performed by a microprocessor or other computing device within the system.

The method of the present invention can be used to provide or receive more than one active area in a video clip.

Frames can be chosen for manual interpolation in different manners. For example, in one embodiment, every nth frame is manually interpolated, where n is an integer (e.g. 10).

The apparatus chosen to perform the interpolation and editing can be a microprocessor-based system with a display screen executing video editing and/or image recognition software programs.

In one embodiment, the first and last frames are not manually annotated. Accordingly, in such embodiments, the location and size of the active areas are extrapolated.

When the video signal is sent to a viewer, both the video and annotation information can be sent as separate signals to receiving system 501, or they can be communicated as parts of a combined signal. The combined signal can be provided by transmitter 504 via broadcast medium 502. Alternatively, the combined signal can be provided via any of the above-mentioned communications media, e.g. optical, cable, microwave transmission, satellite transmission, etc.

The various aspects of the invention can be practiced independently of one another. For example, the annotation apparatus of Fig. 1 can be used without using the signal communication apparatus of Fig. 5. Similarly, the communication apparatus of Fig. 5 can be used to communicate video clips annotated using methods other than the method described above with respect to Figs. 1 to 4. Accordingly, all such changes come within the present invention.

The following paragraphs correspond to the claims of the parent application PCT/US00/24263 published as WO 01/18676. They are included to provide a complete understanding of this invention and related technology.
1. A method for establishing the location of an active area within a video clip, said video clip comprising a set of frames, said method comprising the acts of:
   (a) establishing the location of said active area for a first plurality of frames within said set of frames;
   (b) establishing the location of said active area for a second plurality of said frames within said set of frames by interpolation based on the location established during act (a) above.
2. Method of claim 1 wherein the locations established during the acts (a) and (b) are stored in a memory device.
3. Method of claim 1 wherein act (a) comprises:
   displaying said first plurality of frames on a display device; and
   manually annotating said frames by storing within a memory information concerning the location of said active area within said first plurality of frames.
4. Method of claim 1 wherein said interpolation is linear interpolation.
5. Method of claim 1 wherein said interpolation is spline interpolation.
6. Method of claim 1 wherein said first plurality of frames are key frames.
7. Method of claim 1 wherein said interpolation is performed by a computing device within an editing system.
8. Method of claim 1 further comprising the acts of:
   (c) displaying the active area for a third plurality of frames within said set of frames;
   (d) annotating at least some of said frames within said second plurality; and
   (e) establishing the position of said active area within said second plurality but not within said some of said frames by interpolation after performing act (d).
9. Apparatus comprising:
   a memory device storing a video clip, said video clip comprising a plurality of video frames;
   an input device for inputting information into said apparatus indicating the location of an active area within some of said video frames; and
   a computing device within said apparatus for establishing the location of said active area for other frames within said plurality.
10. Apparatus of claim 10 wherein said computing device establishes the location of said active area for said other frames within said plurality of interpolation.

24. Method comprising the steps of:
   providing a video clip, said video clip comprising a group of frames, said video clip depicting an object;
   annotating some of said frames within said group of frames, but not others of said frames within said group of frames, by storing in a memory the location of an active area within said some of said frames associated with said object;
   establishing the location of said active area for said others of said frames by interpolation;
   using automated image recognition to determine those frames within said others of said frames for which the distance between said active area and said object is large compared to others of said frames that are not within said first plurality.
26. A method comprising the steps of:
   receiving a video image;
   displaying said video image as a sequence of frames;
   receiving information corresponding to the location of at least one active area for some of said frames but not others of said frames; and
   determining the location of said active area for said others of said frames based on said received information.
27. Method of claim 26 wherein said step of determining is performed by linear interpolation.
28. Method of claim 26 wherein said step of determining is performed by spline interpolation.
29. Method of claim 26 wherein information corresponding to the size of said active area is received for said some of said frames but not said others of said frames, said method also comprising the step of determining the size of said active area for said others of said frames by interpolation.
30. Method of claim 26 wherein said active area is associated with a link, said method further comprising the step of activating said link.
31. Method of claim 26 wherein said link is a link to an internet page.
32. Method of claim 26 further comprising activating said link.
33. Method of claim 32 wherein said displaying comprises displaying said video on a display screen and said activating comprises clicking on an active area on said display screen.
34. Method comprising:
   communicating a video clip comprising a set of video frames, some of the video frames within said set of video frames being annotated such that an active area is established for said some of said video frames;
   communicating the location of said active area for said some of the video frames within said set of video frames and not others of said video frames within said set of video frames.
35. Method of claim 34 wherein said video clip is communicated through a first communication medium and said location of said active area is communicated through a second communication medium that is different from said first communication medium.
36. Method of claim 34 further comprising:
   receiving said video clip and the location of said active area for some of said video frames within said set of video frames and not said others of said video frames; and
   establishing positions for said active area within said others of said video frames by interpolation.
37. Method of claim 36 wherein said active area is associated with an object, said object being shown in each of said video frames within said set of video frames.
38. A system comprising:
   a receiver for receiving a video signal;
   a display coupled to said receiver for displaying a video image corresponding to said video signal, said video image comprising a set of frames;
   a circuit receiving information indicating the position of at least one active area for some of said frames and not others of said frames, said circuit determining the location of said active area for said others of said frames by interpolation based on the location of said active area for said some of said frames.
39. System of claim 38 further comprising a transmission system for transmitting said video signal and said information corresponding to the position of at least one active area for said one of said frames and not said others of said frames.
40. Apparatus comprising:
   a first memory storage device storing a video signal, said video signal comprising a set of frames;
   a memory storage device storing the location of an active area for some of said frames;
   a transmitter for transmitting said video signal and said location of said active area for said some of said frames but not others of said frames, whereby a system receiving said video signal and said location of said active area for said some of said frames can establish a location for said active area for said others of said frames by interpolation.
41. Apparatus comprising:
   a memory storing a video clip;
   a structure for establishing the location of an active area for some of the frames of the video clip but not other frames of the video clip; and
   a transmission system for transmitting the video clip and the location of the active area for said some of said frames of the video clip but not other frames of the video clip.
42. Apparatus of claim 41 further comprising a receiving unit for receiving and displaying the video clip and establishing the location of said active area for said other frames by interpolation.
43. A method for establishing the location of an active area within a series of frames of images, said method comprising the acts of:
   (a) establishing the location and/or size of said active area for a first plurality of frames within said series of frames;
   (b) establishing the location and/or size of said active area for a second plurality of said frames within said series of frames by calculation based on the location established during act (a) above.
44. Apparatus of claim 40 wherein said memory storage device stores the location of said active area for some of said frames but not others of said frames.

## Claims

1. A method comprising:
providing a video clip comprising a set of frames, a first plurality of frames within said set being annotated with information indicating the location of an active area, said active area being associated with an object shown within said video clip;
establishing location data for said active area for those frames that are not within said first plurality by interpolation;
using automated image recognition to identify one or more of said frames that are not within said first plurality for which the distance between said active area and said object is large compared to others of said frames that are not within said first plurality.

2. Method of claim 1 wherein said automated image recognition identifies frames in which the distance between said active area and said object exceeds a threshold value.

3. Method of claim 1 wherein said automated image recognition identifies the n frames for which the distance between the active area and object are largest, where n is an integer.

4. Method of claim 1 further comprising displaying said one or more frames on a display so that a viewer can see the distance between said active area said object in said one or more frames.

5. Method of claim 1 further comprising annotating at least one of said one or more frames after said act of using.

6. Method of claim 5 further comprising establishing location data for said active area for those frames that are not within said first plurality and are not within said at least one frame by interpolation.

7. Method of claim 6 further comprising displaying the frames whose location data has been established by interpolation so that a user can see how far the active area is from the object.

8. Method of claim 1 wherein an operator annotates said first plurality of frames with said information prior to said act of establishing.

9. Method of claim 8 wherein said annotation is performed by storing data in a memory indicating the position of said active area for said first plurality of frames.

10. Method of claim 1 wherein said video clip is stored in a memory device.

11. Method of claim 10 wherein said information indicating the location of an active area is stored in the same memory device as said video clip.

12. Method of claim 11 wherein said video clip and said information indicating the location of an active area are located in different files within said memory device.

13. Method of claim 11 wherein said information indicating the location of said active area is embedded within said video clip.

14. Apparatus comprising:
a memory structure for storing a video clip, said video clip comprising a set of frames, a first plurality of frames within said set being annotated with information indicating the location of an active area, said active area being associated with an object shown within said video clip;
means for establishing location data for said active area for those frames that are not in said first plurality by interpolation;
means for using automated image recognition to identify one or more of said frames for which the distance between said active area and said object is large compared to others of said frames that are not within said first plurality.
